# EUROPEAN PATENT APPLICATION

(11) **EP 2 048 390 A2**
(43) Date of publication of application: **15.04.2009**
(21) Application number: 07254052.9
(22) Date of filing: 12.10.2007
(51) Int. Cl.: F16C 32/04

(54) **Armature with coated sheets, magnetic bearing with an armature and method for assembling an armature**

(71) Applicant: GENERAL ELECTRIC COMPANY, Schenectady, NY 12345 (US)
(72) Inventor: Brisson, Bruce Eilliam, Galway, New York 12074 (US); Weeber, Konrad Roman, Rexford, New York 12148 (US); Morra, Martin Mathew, Glenville, New York 12302-4606 (US)
(74) Representative: Bedford, Grant Richard

(57) **Abstract**

Disclosed herein are magnetic bearings, armatures (2) for magnetic bearings, and methods for their production. In one embodiment, an armature (2) is disclosed. The armature (2) comprises a stack (14), having a first end and a second end, of insulating layers (8) and coated plates (6) disposed adjacent one another. A first compression collar (22) is disposed at the first end, a second compression collar (22) is disposed at the second end, and a shaft (4) is disposed through the first and second compression collars (22) and the stack (14). The coated plates (6) comprise core plates (10) having a coating (12) disposed thereon, wherein the coating (12) comprises a material selected from the group consisting of a metal, a metal alloy, a metal oxide, an intermetallic compound, a multi-phase alloy, a solid solution, and combinations comprising at least one of the foregoing. In addition, magnetic bearings and methods for assembling armatures (2) are disclosed.

## Description

The teachings herein relate generally to bearings, and more specifically to magnetic bearings and methods for their production.

Magnetic bearings are capable of magnetically levitating an armature for rotational or linear motion. This is achieved by disposing a radial array of magnets around an armature, wherein the radial array is capable of generating magnetic forces that can support the armature without direct contact. In radial bearing systems, a magnetic thrust bearing (also referred to as a magnetic double axial bearing) can also be employed in combination with the radial bearing to hinder axial movement of the armature. Magnetic thrust bearings comprise two disc arrays disposed on either side of a rotor that is connected to the armature. The disc arrays are capable of generating magnetic forces capable of centering the rotor therebetween without direct contact.

The magnetic forces generated by the radial array and the disc arrays can be produced via electromagnets and/or permanent magnets. In systems that employ electromagnets, control systems can be employed to monitor the position of the armature and adjust electrical current to the electromagnets to keep the armature generally centered when acted upon by forces (e.g., radial and/or axial forces). Under a radial load for example, the control system can detect a change in the armature's radial position using various sensors (e.g., inductive sensors, magnetic flux sensors, eddy current sensors, optical sensors, capacitive sensors, and so forth) mounted about the radial array. The control system can utilize the signal received from the sensors to determine the amount of additional electrical current, and where the current is to be directed, in order to alter the magnetic attraction of the array and re-center the armature. Similarly, when the armature is acted upon by an axial load, the control system can utilize input from sensor disposed about the disc arrays to counteract the load by directing additional electrical current to one of the disc arrays, which alters the magnetic attraction of the array and re-centers the rotor therebetween.

Seeing as magnetic bearings operate without direct contact, they provide several notable benefits compared to rolling bearings. For example, magnetic bearings operate at a reduced temperature compared to rolling bearings because there is no frictional heat generated within a magnetic bearing. As a result, magnetic bearings do not require lubrication and/or cooling systems, and enable greater operating speeds. In addition, magnetic bearings generally exhibit greater service life as compared to roller bearings and consume a lower amount of energy.

Although magnetic bearings offer several noteworthy benefits over roller bearings, there remains a need in the art for corrosion resistant magnetic bearings.

The above discussed and other drawbacks and deficiencies are overcome or alleviated by various of the teachings disclosed herein.

Disclosed herein are magnetic bearings, armatures for magnetic bearings, and methods for their production. In one embodiment, an armature comprises, an insulating layers and a coated plate disposed adjacent one another to form a stack having a first end and a second end. A first compression collar is disposed at the first end of the stack, a second compression collar is disposed at the second end of the stack, and a shaft is disposed through the stack and first and second compression collars. The coated plates comprise a core plate having a coating disposed thereon, wherein the coating comprises a material selected from the group consisting of a metal, a metal alloy, a metal oxide, and combinations comprising at least one of the foregoing.

Also disclosed is a magnetic bearing, wherein the magnetic bearing comprises an armature that is disposed within an electromagnetic array, wherein the armature comprises coated plates capable of producing magnetic flux. The coated plates comprise core plates having a coating disposed thereon, wherein the coating comprises a material selected from the group consisting of a metal, a metal alloy, a metal oxide, an intermetallic compound, a multi-phase alloy, a solid solution, and combinations comprising at least one of the foregoing materials.

Further disclosed is a method for the manufacture of an armature, wherein the process comprises, disposing a coating on core plates to form a coated plates, assembling insulating layers and the coated plates within an assembly tube, compressing the insulating layers and the coated plates between compression collars, thereby forming a sub-assembly, heating the sub-assembly, inserting a shaft through the sub-assembly to form an assembly, cooling the assembly, and removing the assembly tube from the sub-assembly to form an armature.

Various features and advantages of the present invention will be appreciated and understood by those skilled in the art from the following detailed description and drawings, in which:
Figure 1 is an isometric, cut-away, partial view of an exemplary armature.
Figure 2 is an oblique and cross-sectional view of an exemplary coated plate.
Figure 3 is a cross-sectional view of an exemplary assembly.
Figure 4 is a cross-sectional and partial side view of an exemplary modified compression collar.
Figure 5 is a cross-sectional and partial side view of an exemplary threaded compression system.
Figure 6 is a cross-sectional and partial side view of an armature having a second coating disposed on at least a portion of the stack.
The authors hereof have discovered that individually coating the ferrous and/or permanent magnet components of a bearing's armature with a corrosion resistant coating, such as high phosphorous content electroless nickel, can extend the service life of magnetic bearings. In addition, these coatings are advantageous as they do not, or only minimally, reduce the magnetic flux of the armature, thereby enabling the bearings to operate at high efficiencies. Methods of assembly have also been developed that utilize an assembly tube to quickly and easily assemble the various plates and laminates of the armature. Once these are assembled, the assembly tube can then be utilized to support the plates and laminates of the armature during further processing steps.
Magnetic bearings have been employed in many applications, such as motors, generators, and water turbines as an alternative to rolling bearings or fluid film bearings. Fluid film bearings require seals or gaskets to prevent the bearing fluid from entering the cooling medium of the rotor that is supported by the bearing, and additional auxiliary systems to cool and circulate the bearing fluid. Particular utility of magnetic bearings has been exhibited in applications wherein the elimination of a bearing fluid and its auxiliary system provides substantial design simplifications for applications such as gas compressors and turbo expanders. In these applications the magnetic bearings have to operate in the process fluid such as natural gas. The natural gas stream typically contains contaminants and corrosive gases, especially for applications that are close to the well head. In these cases it is important that the magnetic bearing and especially the armature of the magnetic bearing have a corrosion-resistant design to guarantee prolonged service life in corrosive environments.
Referring now to Figure 1, an armature 2 comprises a shaft 4 on which a plurality of coated plates 6 and insulating layers 8 are disposed adjacent one another forming a stack 14. Disposed at both ends of the stack 14 are compression collars 22, which axially secure the stack 14 on the shaft 4.
The insulating layers 8 are formed from a material that is capable of electrically insulating (e.g., electrically, magnetically, and so forth) the adjacent coated plates 6 to minimize losses in efficiency caused by circulating currents. Exemplary materials comprise electrically insulating materials, such as ceramics (e.g., alumina, cordierite, and magnesium oxide), polymeric materials (e.g., thermoplastic polymers (e.g., polytetrafluoroethylenes or polyimides) and/or thermosetting polymers (e.g., epoxy)), and so forth. To be more specific, exemplary thermoplastic resins comprise: polyalkylenes (e.g., polyethylene, polypropylene, polyalkylene terephthalates (e.g., polyethylene terephthalate or polybutylene terephthalate)), polycarbonates, acrylics, styrenes (e.g., impact-modified polystyrene, acrylonitrile-butadiene-styrene, and styrene-acrylonitrile), poly(meth)acrylate (e.g., polybutyl acrylate and polymethyl methacrylate), polyamides (e.g., Nylon 6,6 and Nylon 11), polyethers (polyetheramide, polyetherketones, polyether etherketones, and polyether ketone ketones) polysulfones, and so forth, as well as combinations comprising at least one of the foregoing. Exemplary thermosetting resins comprise: polyurethanes, natural rubbers, synthetic rubbers, epoxys, phenolics, polyesters, polyamides, silicones, and so forth, as well as combinations comprising at least one of the foregoing. The specific electrically insulating material is to be capable of enduring thermal shrink fit assembly processes (as disclosed below) without deleterious effects on the insulating layers 8 performance (e.g., service life). Further, the insulating layers 8 can be provided as separate laminations (as illustrated) or applied as an electrically insulating coating applied to each individual coated plate 6.

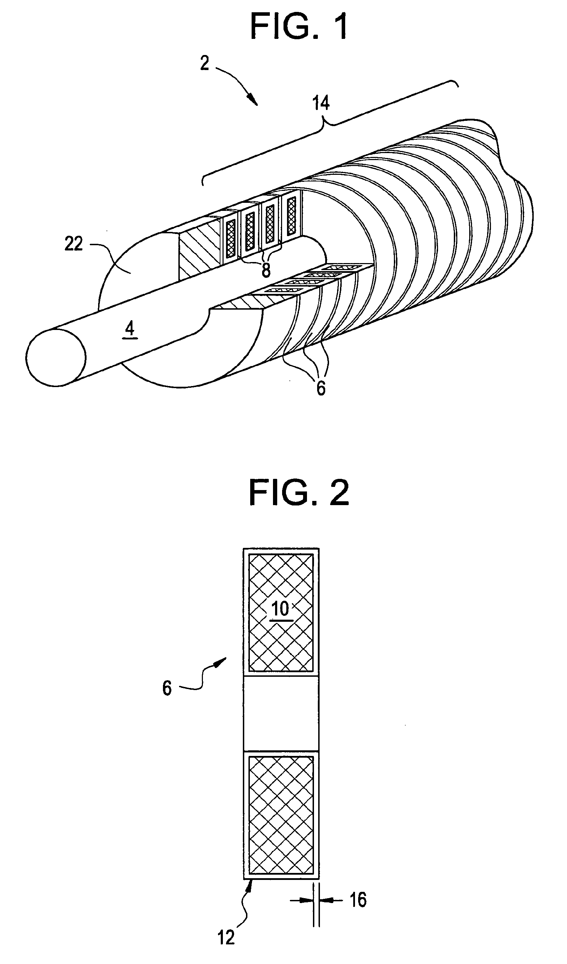

The stack 14 can comprise any configuration of coated plates 6 and insulating layers 8 that enable magnetic levitation of the armature 2. For example, the configuration illustrated in Figure 1 comprises an alternating pattern of coated plates 6 and insulating layers 8, which can be represented as the repeating pattern "AB", wherein "A" signifies insulating layers 8 and "B" signifies coated plates 6. Additionally, configurations comprising other repeating patterns can be employed, such as repeating patterns (e.g., repeating patterns comprising "AB-AB-AB...", "ABA-ABA-ABA...", and so forth), and so forth, as well as configurations comprising combinations of at least one of the foregoing provided the laminations prevent the formation of undesirable electrical currents (e.g., circulating currents) and/or an unacceptable reduction in magnetic flux. In addition, these configurations can comprise additional coated plates 6 and/or insulating layers 8 that differ from the other coated plates 6 and/or insulating layers 8 employed (e.g., differ in material(s), coating(s), geometry, and so forth). For example, each coated plate in the stack does not have to comprise the same core material or the same coating, and/or the insulating layers can have different or the same materials. As a result, various additional configurations can be employed.

Referring now to Figure 2, an oblique and cross-sectional view of a coated plate 6 is illustrated. The coated plate 6 comprises a core plate 10 having coating(s) 12 disposed on the outer surfaces of the core plate 10 (e.g., the outer surfaces that can be corroded by a corrosive environment when disposed on the armature 2). The core plate 10 comprises ferrous and/or magnetic materials, which allow the core plate 10 to be magnetically attracted to a radial magnetic array (e.g., as employed in a radial bearing) or a magnetic plate array (e.g., as employed in a thrust bearing), or other arrays. Exemplary ferrous materials comprise iron, such as iron alloys (e.g., ferritic stainless steels), and so forth. Exemplary magnetic materials comprise: ceramic magnets (e.g., magnets comprising iron oxide), alnico magnets (e.g., magnets comprising aluminum-nickel-cobalt), rare earth magnets (e.g., magnets comprising elements from the lanthanide group, such as neodymium), samarium cobalt magnets (e.g., magnets comprising samarium cobalt), and so forth.

The coating(s) 12 can comprise any material that is capable of providing a corrosion resistance and exhibits no, or minimal (e.g., less than 20%), reduction in the armatures 2 magnetic flux. Exemplary materials comprise metals (e.g., nickel, platinum, gold, and chromium), metal alloys (e.g., nickel-chromium, nickel-aluminum, nickel-phosphorus, cobalt-chromium alloys, as well as martensitic, and austenitic materials), multiphase metallic alloys, intermetallic compounds (e.g., Ni₃P, Ni₃Al, Ni₃Ti, phosphides, carbides, silicides, borides, aluminides, and nitides), metals with protective oxide films, ceramics (e.g., alumina and zirconia), and so forth, as well as combinations comprising at least one of the foregoing. In one embodiment, a superalloy comprising nickel, chromium, tungsten, molybdenum, tantalum, niobium, hafnium, titanium, and aluminum, can be employed. More specifically, a nickel superalloy such as Deloro® Alloy (commercially available from the Deloro-Stellite Company, Swindon, UK) can be employed, which comprises (by weight): about 0.05% cobalt, about 1.7% boron, about 0.4% iron, about 2.7% silicon, with a balance of nickel (about 95.15%). It is to be noted that the amount of iron that can be employed in the coating will depend on the overall effects caused to the operation of the magnetic bearing (e.g., operating efficiency, corrosion resistance, changes and/or alteration of magnetic flux, and so forth). Also, it is to be apparent that if electrical conductors are employed as the coating 12 it is necessary to provide an insulation layer 8 between the coated plates 6 to prevent excessive eddy current losses in the armature. Also, electrical communication between the shaft 4 and the coated plates 6 essentially acts to ground the coated plates 6 but does not allow circulating currents.

Coating(s) 12 comprises a thickness 16 that is sufficient to provide corrosion resistance to the core plate 10. In addition, the coating 12 is to comprise minimal residual stresses to prevent spallation, delamination, or cracking. The specific thickness 16 of the coating(s) 12 will be dependent on the coating materials employed, the coating's effectiveness of withstanding the specific corrosive environment in which it is employed, as well as other variables, such as: the coating's effects on the armature's magnetic flux, coating costs, durability, and so forth. In one example, a coating 6 (e.g., comprising nickel) can be employed which has a thickness 16 of about 1 micrometers (µm) to about 1000 micrometers (µm), or more specifically, about 2 to about 100 µm, or even more specifically about 4 to about 10 µm.

Coatings can be applied using any method that does not detrimentally affect the physical or mechanical properties of the core plate 10 (e.g., does not cause hydrogen embrittlement, stress cracking, and so forth) or cause the core plate 10 to corrode during the process. For example, some metal electroplating processes can provide a sufficient corrosion resistant coating, however, many of the processes employed for plating can cause hydrogen by the iron, which increases the core plate's susceptibility to cracking. However, in one embodiment, a phosphate electroless coating process can be employed to apply a nickel-phosphorous alloy coating to the core plates 10. This coating 12 can comprise a thickness 2 of about 10 µm to about 500 µm on all surfaces of core plate 10. In yet another embodiment a chemical vapor deposition process can be employed to deposit a titanium-nickel or nickel aluminum coatings comprising a thickness of about 10 µm to about 100 µm on the core plate 10.

Multiple coatings can be employed to improve the corrosion resistance of the armature 2, as well as provide additional enhancements, such as, improved thermal resistance, improved wear resistance (e.g., surface wear), as well as others. For example, a thermal spray method (e.g., air plasma spray (APS), vacuum plasma spray (VPS), high velocity oxy-fuel (HVOF), and so forth) can be employed to deposit an alumina layer onto the core plate 10. Once applied thereto, a thermal spray method can be employed to dispose a cobalt-chromium alloy onto the alumina coating.

The shaft 4 can comprise metals (e.g., aluminum, copper, and nickel), metal alloys (e.g., nickel-cobalt-chromium-aluminum alloys, as well as martensitic, ferritic, and austenitic materials), intermetallics (e.g., boron-nitride, silicon-carbide), and so forth, as well as combinations comprising at least one of the foregoing. Prior to assembling the coated plate(s) 6 and insulating layers(s) 8 onto the shaft 4, the shaft 4 can be coated with a coating as well. These coatings can comprise any of material discussed herein for the coating(s) 12. Furthermore, coating the shaft 4 can hinder and/or prevent galvanic corrosion if the coating on the shaft 4 is the same as, or similar to (e.g., the anodic indexes of the coatings are such that galvanic corrosion is prevented) the coating 12 employed on the coated plates 6. For example, if the coated plates 6 comprise a nickel phosphorous alloy coating, the shaft 4 can also be coated with a nickel phosphorous alloy coating prior to assembly to prevent galvanic corrosion.

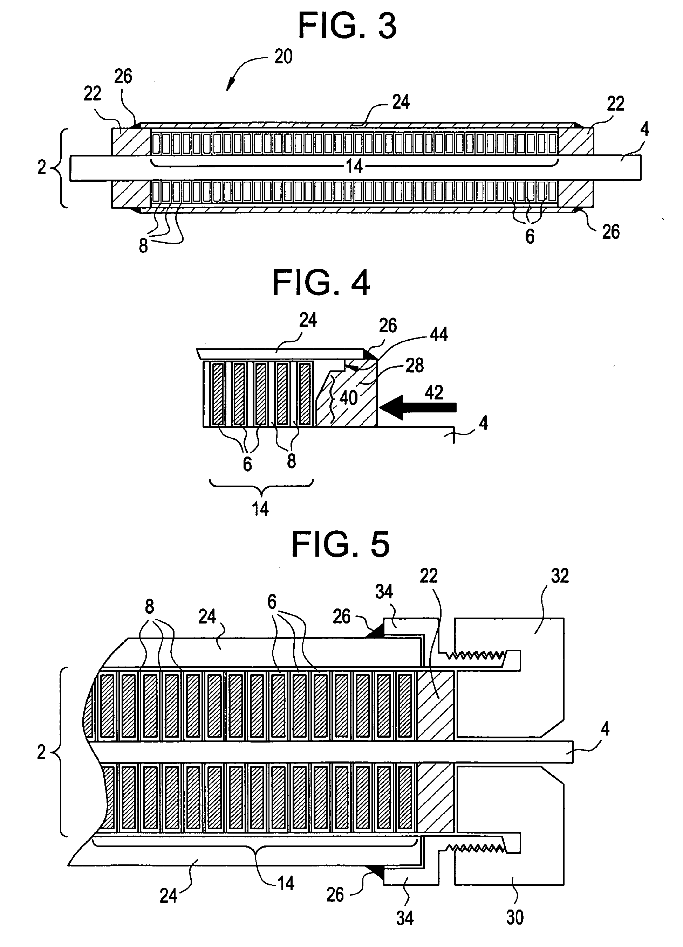

The armature 2 can be assembled utilizing various methods. In one such method, an assembly tube is employed to co-axially align the coated plates 6 and insulating layers 8 prior to assembling a shaft 4 therein. Referring now to Figure 3, a cross-sectional view of an assembly 20 is illustrated. The assembly 20 comprises an armature 2 disposed within an assembly tube 24. The assembly 20 is formed by disposing the desired number of coated plates 6 and insulating layers 8 into the assembly tube 24, which forms a stack 14. Thereafter, compression collars 22 are disposed on both ends of the stack 14 and pressure is exerted onto the compression collars 22 to compress the stack 14. Once the stack 14 is compressed, the compression collars 22 are secured to the assembly tube 24 (e.g., via a weld 26, or brazing, fastening (e.g., a pin, bolt, and so forth), to form a sub-assembly. The sub-assembly (i.e., a stack 14 compressed between compression collars 22 disposed within an assembly tube 24) is then heated to a sufficient temperature to expand the compression collars 22, coated plates 6, and insulating layers 8 so that the shaft 4 can be inserted therethrough. Once the assembly 20 cools, the stack 14 and compression collars 22 are secured to the shaft 4, forming an armature 2. The assembly tube 24 can then be removed from the armature 2 using machining operations (e.g., grinding, cutting, and so forth). In one example, the assembly 20 is fixed within a lathe to remove the welds 26. It is to be apparent that additional assembly processes can be employed. For example, hydraulic shrink fit processes, press fit process, keyed connections, and so forth can be used to assemble the armature 2.

The compression collars 22 can comprise any material and configuration that is capable of securing the coated plates 6 and insulating layers 8 on the shaft 4 under a desired pressure. The compression collars 22 can comprise metals (e.g., iron, aluminum, copper, or nickel), metal alloys (e.g., nickel-cobalt alloys, as well as martensitic and austenitic materials), intermetallic compounds (boron-nitride, silicon-carbide), and so forth, as well as combinations comprising at least one of the foregoing. In one embodiment, the compression collars 22 can comprise hardened martensitic steel having a nickel phosphorus alloy coating. The exact dimensions (e.g., outer diameter, inner diameter, and length) of the compression collars 22 will depend upon the application and the variables associated therewith (e.g., desired compression forces, shaft diameter, stack length, and so forth). In addition, the compression collars 22 can be modified for additional functionality. For example, the face of the compression collars 22 can be modified to alter the area that is in contact with the stack 14.

Referring now to Figure 4, a modified compression collar 28 comprises a modified contact face 40 that contacts the stack 14 near the shaft 4. It is to be apparent however that the modified contact face 40 can comprise any geometry that is capable compressing the stack 14. The compression collar 22 can also be modified to comprise a recessed portion 44 so that the machining tool (e.g., cutting bit, grinding stone, and so forth) is kept a distance away from the armature 2 when the welds 26 are removed. This can decrease the risk of damaging the coated plates 6 and/or insulating layers 8 during machining.

Although the compression collars 22 are welded (e.g., weld 26) to the assembly tube 24 in the above method, the compression collars 22 and assembly tube 24 can comprise alternative configurations that are capable of securing and/or compressing a stack 14. For example, referring now to Figure 5, a threaded compression system 30 comprises a compression cap 32 that can be threaded onto a threaded connector 34, which is fixed onto the assembly tube 24 (e.g., via a weld 26, crimp, or otherwise). The threaded compression system 30 can be utilized to assemble and compress an armature 2 by first assembling the coated plates 6 and insulating layers 8 into the assembly tube 24 that is fitted with a threaded connector 34, to form a stack 14 therein. Compression collars 22 can then be disposed on either side of the stack (it is noted that one compression collar can first be introduced to the assembly tube 24 and then the stack formed on top of it, before disposing a second compression collar 22 on the stack). Once the compression collars 22 are disposed on either side of the stack 14, compression cap(s) 32 can be threaded onto the threaded connectors 34 to form a sub-assembly. The compression cap(s) 32 can then be tightened until a sufficient amount of compression has been exerted on the stack 14. The sub-assembly can then be further processed as described above to form the armature 2. In this embodiment, however, the cap(s) 32 can be unscrewed and the armature 2 removed from the assembly tube 24 without machining or the like. In an alternate embodiment, the assembly tube 24 can be replaced with tension members such as bolts, cables, and so forth, which can connect to the compression collars 22 to provide axial compression. In one specific embodiment, bolts can connect to snap rings seated within the compression collars 22.

Prior to assembly, the compression collars 22 can be coated with any of the coatings discussed herein to improve their corrosion resistance and/or to reduce or prevent galvanic corrosion with the shaft 4, coated plates 6, or any other components that contact the compression collars 22.

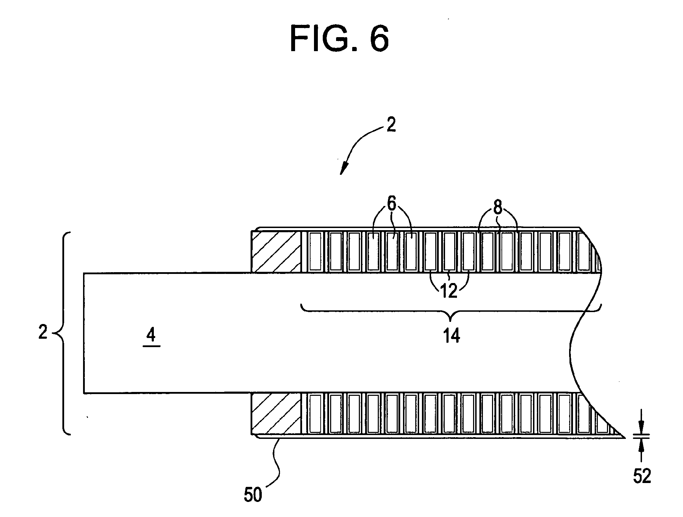

After the armature 2 has been assembled, it can be coated with a second coating. Referring now to Figure 6, a cross-sectional and partial side view of an armature 2 is illustrated, wherein a second coating 50 is disposed on at least a portion of the stack 14. The second coating 50 can comprise electrically insulating materials, such as ceramics (e.g., alumina, cordierite, and magnesium oxide), polymeric materials (e.g., thermoplastic polymers (e.g., polytetrafluoroethylenes or polyimides) and/or thermosetting polymers (e.g., epoxy)), and so forth. In one specific example, a second coating 50 comprising epoxy is disposed on the armature 2 utilizing a powder coating process.

The second coating 50 can comprise a thickness 52 that is sufficient to provide additional corrosion resistance to the stack 14 and/or the compression collars 22. The specific thickness 52 of the second coating 50 will be dependent on the coating materials employed, the coating's effectiveness of withstanding the specific corrosive environment in which it is employed, as well as the effectiveness of the coating 50 as well as other variables, such as: the coating's effects on the armature's magnetic flux, coating costs, durability, and so forth. In one example, a second coating 52 comprising a polytetrafluoroethylene polymer can be employed which has a thickness 52 of about 25 micrometers (µm) to about 1 millimeter (mm).

The armature 2 and/or stack 14 can be coated with any number of coating layers in order to provide sufficient corrosion resistance and service life so long as the coatings don't substantially adversely effect the function of the bearings. In one embodiment, the coating 12 applied to the coated plates 6 can be a nickel phosphorus alloy coating and the second coating 50 can comprise an epoxy polymer. A third coating (not shown) can then be applied over the second coating 50, wherein the third coating comprises a metal oxide, which can provide the armature 2 with enhanced corrosion resistance and wear resistance (e.g., corrosion caused by exhaust gases, chemicals, byproducts, and so forth, and wear caused by sand, dust, and/or debris).

Once the armature 2 has been assembled, it can be assembled into an array (e.g., radial array or disc array) to form a magnetic bearing.

The armatures 2 disclosed herein are coated and assembled to enable the production of magnetic bearings having improved corrosion resistance, wear resistance and provide enhanced service life. Further, these coatings have either no or minimal impact on the magnetic flux of the bearing, therefore enabling the bearing to operate at high efficiency. Further, the method of assembly disclosed enables manufacturers to coat the ferrous and/or magnetic plates (e.g., coated plates 6) prior to their assembly on the armature. This improves ease of handling during the coating process(es) and results in greater efficiency during assembly. Yet even further, the method employed to manufacture the armature employs an assembly tube 24 that quickly co-axially aligns the coated plates 6 and the insulating layers 8 as a stack 14 is being assembled and maintains alignment of the coated plates 6 and insulating layers 8 during assembly. As a result, magnetic bearings have improved properties. Additionally, efficient methods of production enable manufacturers a cost competitive and efficient manner of producing magnetic bearings with improved service life when employed in corrosive environments.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed for carrying out this invention, but that the invention will include all embodiments falling within the scope of the appended claims.

## Claims

1. An armature (2), comprising: a stack (14) having a first end and a second end, wherein the stack (14) comprises insulating layers (8) and coated plates (6) disposed adjacent one another; a first compression collar (22) disposed at the first end and a second compression collar (22) disposed at the second end; a shaft (4) disposed through the first compression collar (22), the stack (14), and the second compression collar (22); and,
wherein the coated plates (6) comprise core plates (10) having a coating (12) disposed thereon, wherein the coating (12) comprises a material selected from the group consisting of a metal, a metal alloy, a metal oxide, an intermetallic compound, a multi-phase alloy, a solid solution, and combinations comprising at least one of the foregoing.

2. The armature (2) of Claim 1, further comprising a second coating disposed on the armature (2), wherein the second coating comprises a second material selected from the group consisting of ceramic materials, polymeric materials, and combinations comprising at least one of the foregoing materials.

3. The armature (2) of any preceding Claim, wherein the second coating is disposed on an outer surface of a component selected from the group consisting of the coated plates (6), the insulating layers (8), the stack (14), the first compression collar (22), the second compression collar (22), the shaft (4), and combinations comprising at least one of the foregoing.

4. A magnetic bearing comprising the armature of any preceding Claim.

5. A magnetic bearing, comprising:
an electromagnetic array;
an armature (2) disposed within the electromagnetic array, wherein the armature comprises coated plates (6) capable of producing magnetic flux; and,
wherein the coated plates (6) comprise core plates (10) having a coating (12) disposed thereon, wherein the coating (12) comprises a material selected from the group consisting of a metal, a metal alloy, a metal oxide, an intermetallic compound, a multi-phase alloy, a solid solution, and combinations comprising at least one of the foregoing materials.

6. The magnetic bearing of Claim 5, wherein the material induces less than or equal to about a 20% reduction in the magnetic flux.

7. A process for assembling an armature (2), comprising:
disposing a coating (12) on core plates (10) to form a coated plates (6);
assembling insulating layers (8) and the coated plates (6) within an assembly tube (24);
compressing the insulating layers (8) and the coated plates (6) between compression collars (22), thereby forming a sub-assembly;
heating the sub-assembly;
inserting a shaft (4) through the sub-assembly to form an assembly;
cooling the assembly; and,
removing the assembly tube (24) from the sub-assembly to form an armature (2).

8. The process of Claim 7, wherein the coating (12) comprises a material selected from the group consisting of a metal, a metal alloy, a metal oxide, an intermetallic compound, a multi-phase alloy, a solid solution, and combinations comprising at least one of the foregoing materials.

9. The process of Claim 7 or Claim 8, further comprising securing the compression collars (22) to the assembly tube (24).

10. The process of any one of Claims 7 to 9 further comprising disposing a second coating on the coated plates (6), the compression collars (22), the shaft (4), or combinations comprising at least one of the foregoing.
